Europäisches Patentamt

European Patent Office

Office européen des brevets

(11) Publication number: **0 286 172 B1**

## (12) EUROPEAN PATENT SPECIFICATION

(45) Date of publication of patent specification: **01.07.92**  (51) Int. Cl.⁵: **H01S 3/02, G02B 7/04**

(21) Application number: **88200615.8**

(22) Date of filing: **01.04.88**

(54) **Laser module.**

(30) Priority: **09.04.87 NL 8700836**

(43) Date of publication of application:
**12.10.88 Bulletin 88/41**

(45) Publication of the grant of the patent:
**01.07.92 Bulletin 92/27**

(84) Designated Contracting States:
**DE FR GB NL**

(56) References cited:
**GB-A- 345 102**
**US-A- 4 297 713**

**REVIEW OF SCIENTIFIC INSTRUMENTS, vol. 52, no. 6, June 1981, pages 852-857, American Institute of Physics, New York, US; S.M. GEORGE et al.: "Passively mode-locked Nd:glass laser oscillator optimized for TEMoo selectivity and long term stability and reliability"**

(73) Proprietor: **Océ-Nederland B.V.**
**St. Urbanusweg 43**
**NL-5914 CC Venlo(NL)**

(72) Inventor: **Berkers, Jacobus Arnoldus Peter**
**Rochusplein 6**
**NL-5988 CG Helden(NL)**

(74) Representative: **Hanneman, Henri W.A.M. et al**
**Océ-Nederland B.V. Patents and Information**
**Postbus 101**
**NL-5900 MA Venlo(NL)**

## Description

The invention relates to a laser module, comprising a laser holder on which a solid state laser is mounted, a lens holder in which a lens system is mounted that receives the light emitted by the laser, the lens holder being movable with respect to the laser holder and being provided with a cylindrical part having a first screwthread.

A laser module of this kind is known from US Patent 4 297 713, which describes a laser printer provided with an integral combination of a laser module and an optical system in order to convert the laser beam of a solid state laser into a collimated beam. The beam is focussed on a photosensitive medium and deflected linewise thereover via a polygonal mirror and a scanning lens. The polygonal mirror and the scanning lens are mounted in a sealed holder. The laser module lens holder is provided with fit surfaces corresponding to fit surfaces on the holder. By means of these fit surfaces the lens holder is mounted and secured in a fixed position against the holder. The laser holder is mounted against the lens holder via special ball and groove connections. A collimator lens system is mounted in the lens holder. To enable this lens system to be moved with respect to the laser in order to obtain the smallest possible spot on the photosensitive layer, the lens holder has a screwthread. A nut provided with a cylindrical hole is mounted on this screwthread. The lens system is pressed against the nut by a spring and the distance between the lens system and the laser can be varied by turning the nut.

A lens system of this kind has a very small depth of focus of about 2-3 $\mu$m so that the distance between the lens system and the laser must be set with an accuracy of about 1 $\mu$m. For this reason, the screwthread is to have the smallest possible pitch. In practice this means a pitch of about 0.35 mm. It is practically impossible to obtain a very much finer thread.

A disadvantage of this known laser module is that an extremely small angular displacement of about 1° of the nut is required for a lens displacement of 1 $\mu$m. The need to lock this nut by a second nut often results in a small angular displacement taking place so that there is a deviation from the distance set previously.

The object of this invention is to obviate these and other disadvantages of the above-described laser module.

According to the invention, this object is attained in a laser module according to the preambles of claim 1 in that the laser holder is provided with a cylindrical recess in which a second screwthread is provided, in that means are provided to prevent rotation of the lens holder, in that a rotatable intermediate ring is disposed between the two screwthreads as considered radially and is provided with an internal screwthread in engagement with the first screwthread and with an external screwthread in engagement with the second screwthread, and the pitch of the internal screwthread being different from the pitch of the external screwthread. Consequently, given a 360° rotation of the intermediate ring, the lens holder displacement corresponds to the difference between the pitches of the internal screwthread and of the external screwthread. Thus using an intermediate ring with an internal screwthread having a pitch of 0.45 mm and an external screwthread with a pitch of 0.50 mm, a lens movement of 1 $\mu$m will correspond to an angular displacement of about 7° of the intermediate ring. This means that the adjustment can be made extremely accurately.

These and other advantages of the laser module according to the invention will be explained by means of the following description with reference to the drawings wherein:

Fig. 1 is a cross-section through the laser module according to the invention and

Fig. 2 is a combined section (A-A) through the laser module.

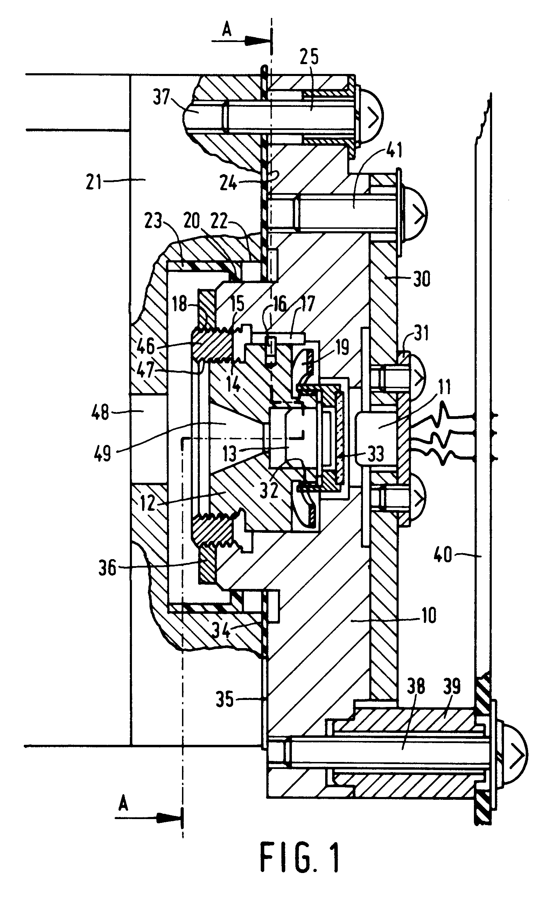

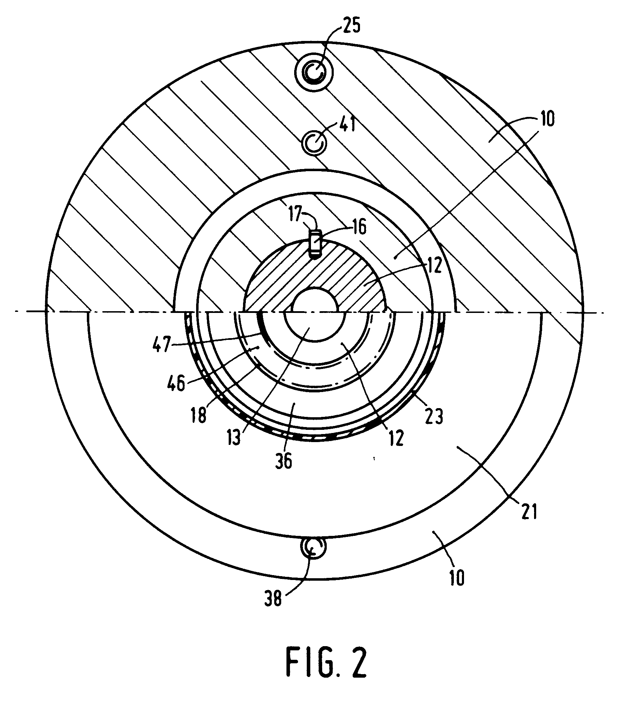

Like parts in Figures 1 and 2 have like references. The laser module is made up of a laser holder 10, a lens holder 12, a module holder 21 and a printed circuit board 40 containing the control electronics for the solid state laser 11.

The module holder 21 is provided with a cylindrical recess 22 and also has an opening 48 to pass the laser light to a polygonal mirror and scanning lens (not shown), usually an f-$\theta$ lens, in order to illuminate a line spotwise each time on a moving photosensitive drum or belt. The module holder 21 also has a circular abutment surface 34 extending around the cylindrical recess 22. Module holder 21 also contains a number of screw holes 37.

The laser holder 10 also contains a cylindrical part, the outside of which has a cylindrical fit surface 20. In order to centre the laser holder 10 in the cylindrical recess 22 of the module holder 21 a strong plastic ring 23 is disposed between the two parts. The laser holder 10 also has a circular fit surface 24 which can be fitted accurately against the abutment surface 34. The laser holder 10 can be secured firmly and with accurate positioning to the module holder 21 by means of bolts 25 secured in screw holes 37. For electrical insulation a thin ring 35 of silicone rubber is mounted between the fit surface 24 and the abutment surface 34. The laser holder 10 is provided with a plate 30 on which the base plate 31 of the solid state laser 11 is secured by means of a number of bolts. Plate 30 has fixing holes of a size such that the plate and hence the laser mounted thereon can be displaced slightly in every direction. Plate 30 is secured in the correct position by bolts 41 to the laser holder 10.

Laser holder 10 has a cylindrical recess in which the lens holder 12 fits exactly. Lens holder 10 is provided with a cam 16 which fits accurately in groove 17, this groove being provided in the laser holder 10 and extending axially. In this way the lens holder 12 can move only axially: rotation in the laser holder 10 is not possible. The lens system 13 is secured in the lens holder 12 by means of a screw cap 32 provided with an opening in which a small glass plate 33 is disposed. The lens system 13 is a collimator system used to convert the divergent laser beam into a substantially parallel beam which is fed to the polygon via a conical hole 49. The lens holder 12 has a first (external) screwthread 14 on the cylindrical part, with a pitch of 0.45 mm. The laser holder 10 is provided with a second (internal) screwthread 15 having a pitch of 0.50 mm. An intermediate ring 46 having an external screwthread 18 with a pitch of 0.50 mm and an internal screwthread 47 with a pitch of 0.45 mm is mounted between the two screwthreads 14, 15. The screwthreads 18, 47 of the intermediate ring 46 are in engagement with the screwthreads 15, 14 on the laser holder 10 and on the lens holder 12.

A compression spring 19 is mounted between the lens holder 12 and laser holder 10 and presses the lens holder 12 axially against the screwthreads 47 and 18 in order to eliminate play in the screwthreads.

The intermediate ring 46 can be secured by a locking ring 36, the inside of which has a screwthread with a pitch of 0.50 mm.

The printed circuit board 40 containing the control electronics for the solid state laser 11 is secured to the laser holder 10 by means of a spacer bush 39 and bolt 38.

Optical adjustment is effected outside the laser printer in a special test rig. Like module holder 21 the rest rig also has a cylindrical recess and an abutment surface. The laser holder 10 with the lens holder 12, intermediate ring 46 and locking ring 36 is mounted in the test rig. At certain intervals the test rig has sensors to measure the location and size of the laser beam. First of all the solid state laser 11 is secured accurately on the optical axis by means of screws. Intermediate ring 46 is then turned to set the exact focussing. A 360° revolution moves the intermediate ring through a distance of 0.50 mm towards the laser. Since the lens holder cannot rotate, it moves 0.45 mm away from the laser on one revolution of the intermediate ring. The resultant of the two movements is that the lens holder moves towards the laser 0.50 - 0.45 = 0.05 mm. When the lens is accurately adjusted the intermediate ring is secured by the locking ring.

Since the depth of focus of the lens system is only 2 - 3 $\mu$m and the working temperature range of the laser is between 10°C and 50°C, the adjustment procedure is performed at a mean temperature (i.e. 30°C). In this way, any deviation of the focussing at different temperatures will be minimised.

The laser module thus having the optimum adjustment is removed from the test rig and can be accurately fitted in a laser holder of a laser printer via the fit surface and the cylindrical fit surface. The solid and simple construction guarantees a high degree of reproducibility.

The invention is not restricted to the embodiment described. For example, the intermediate ring may have any desired screwthread but for accurate adjustment the difference in pitches of the screwthreads must be 0.2 mm maximum. The intermediate ring can be locked in many other ways, e.g. by means of a locking screw which is screwed onto the screwthread via the laser holder. The means 16, 17 for preventing rotation of the lens holder 12 can also be constructed in many different ways. For example, the lens holder may have a flat surface or, more generally, the lens holder need not be rotationally symmetrical.

## Claims

1. A laser module, comprising a laser holder (10) on which a solid state laser (11) is mounted, a lens holder (12) in which a lens system (13) is mounted that receives the light emitted by the laser (11), the lens holder (12) being movable with respect to the laser holder (10) and being provided with a cylindrical part having a first screwthread (14), characterised in that the laser holder (10) is provided with a cylindrical recess in which a second screwthread (15) is provided, in that means (16, 17) are provided to prevent rotation of the lens holder (12), in that a rotatable intermediate ring (46) is disposed between the two screwthreads (14, 15) as considered radially and is provided with an internal screwthread (47) in engagement with the first screwthread (14) and with an external screwthread (18) in engagement with the second screwthread (15), and the pitch of the internal screwthread (47) being different from the pitch of the external screwthread (18).

2. A laser module according to claim 1, characterised in that the difference in the pitches of the internal screwthread (47) and the external screwthread (18) is 0.2 mm maximum.

3. A laser module according to claim 1 or 2, characterised in that a compression spring (19) is disposed between the laser holder (10) and the lens holder (12) so that the lens holder (12) is pressed axially against the intermediate ring (46).

4. A laser module according to claim 1, 2 or 3, characterised in that the laser holder (10) is provided with a cylindrical fit surface (20) to centre the laser holder (10) in a cylindrical recess (22) of a module holder (21).

5. A laser module according to claim 4, characterised in that a plastic fit ring (23) is disposed between the cylindrical fit surface (20) and the cylindrical recess (22) of the module holder (21).

6. A laser module according to any one of the preceding claims, characterised in that the laser holder (10) has an abutment surface (24) and fixing means (25) for fixing the laser holder (10) on the module holder (21).

**Revendications**

1. Module de laser, comprenant un support de laser (10) sur lequel un laser à l'état solide (11) est monté, un support de lentilles (12) dans lequel est monté un système de lentilles (13) qui reçoit la lumière émise par le laser (11), le support de lentilles (12) pouvant se déplacer par rapport au support de laser (10) et étant pourvu d'une partie cylindrique ayant un premier filetage (14), caractérisé en ce que le support de laser (10) est pourvu d'un renfoncement cylindrique dans lequel un second filetage (15) est prévu, en ce que des moyens (16, 17) sont prévus pour empêcher la rotation du support de lentilles (12), en ce qu'une bague intermédiaire pouvant tourner (46) est disposée entre les deux filetages (14, 15) si l'on se place de façon radiale, et est pourvue d'un filetage intérieur (47) prise avec le premier filetage (14) et d'un filetage extérieur (18) prise avec le second filetage (15), et le pas du filetage intérieur (47) étant différent du pas du filetage extérieur (18).

2. Module de laser selon la revendication 1, caractérisé en ce que la différence entre les pas du filetage intérieur (47) et du filetage extérieur (18) est au maximum égale à 0,2 mm.

3. Module pour laser selon la revendication 1 ou 2, caractérisé en ce qu'un ressort de compression (19) est disposé entre le support de laser (10) et le support de lentilles (12), de sorte que le support de lentilles (12) est pressé axialement contre la bague intermédiaire (46).

4. Module pour laser selon les revendications 1, 2 ou 3, caractérisé en ce que le support de laser (10) est pourvu d'une surface cylindrique de montage (20) pour centrer le support de laser (10) dans un renfoncement cylindrique (22) du support de module (21).

5. Module pour laser selon la revendication 4, caractérisé en ce qu'une bague en matière plastique de montage (23) est disposée entre la surface cylindrique de montage (20) et le renfoncement cylindrique (22) du support de module (21).

6. Module pour laser selon l'une quelconque des revendications précédentes, caractérisé en ce que le support de laser (10) a une surface de butée (24) et des moyens de fixation (25) pour fixer le support de laser (10) sur le support de module (21).

**Patentansprüche**

1. Laser-Modul, mit einem Laser-Halter (10), an dem ein Festkörperlaser (11) montiert ist, einem Linsenhalter (12), in dem ein Linsensystem (13) montiert ist, daß das von dem Laser (11) ausgesandte Licht empfängt, wobei der Linsenhalter (11) in bezug auf den Laser-Halter (10) beweglich ist und einen zylindrischen Teil mit einem ersten Gewinde (14) aufweist, dadurch **gekennzeichnet,** daß der Laser-Halter (10) mit einer zylindrischen Ausnehmung versehen ist, in der ein zweites Gewinde (15) ausgebildet ist, daß Mittel (16, 17) zur Verhinderung einer Drehung des Linsen-Halters (12) vorgesehen sind, daß ein drehbarer Zwischenring (46) in Radialrichtung zwischen den beiden Gewinden (14, 15) angeordnet und mit einem Innengewinde (47) in Eingriff mit dem ersten Gewinde (14) sowie mit einem Außengewinde (18) in Eingriff mit dem zweiten Gewinde (15) versehen ist, und daß die Ganghöhe des Innengewindes (47) von der Ganghöhe des Außengewindes (18) verschieden ist.

2. Laser-Modul nach Anspruch 1, dadurch **gekennzeichnet,** daß der Unterschied in den Ganghöhen des Innengewindes (47) und des Außengewindes (18) höchstens 0,2 mm beträgt.

3. Laser-Modul nach Anspruch 1 oder 2, dadurch **gekennzeichnet,** daß zwischen dem Laser-Halter (10) und dem Linsen-Halter (12) eine Druckfeder (19) angeordnet ist, so daß der Linsenhalter (12) axial gegen den Zwischenring (46) angedrückt wird.

4. Laser-Modul nach Anspruch 1, 2 oder 3, dadurch **gekennzeichnet,** daß der Laser-Halter (10) mit einer zylindrischen Passungsfläche (20) zur Zentrierung des Laser-Halters (10) in einer zylindrischen Ausnehmung (22) eines Modul-Halters (21) versehen ist.

5. Laser-Modul nach Anspruch 4, dadurch **gekennzeichnet,** daß ein Passring (23) aus Kunststoff zwischen der zylindrischen Passungsfläche (20) und der zylindrischen Ausnehmung (22) des Modul-Halters (21) angeordnet ist.

6. Laser-Modul nach einem der vorstehenden Ansprüche, dadurch **gekennzeichnet,** daß der Laser-Halter (10) eine Anschlagfläche (24) und Befestigungsmittel (25) zur Befestigung des Laser-Halters (10) auf dem Modul-Halter (21) aufweist.

FIG. 1

FIG. 2